# FASCICULE DE BREVET EUROPEEN

(11) **EP 1 383 596 B1**
(45) Date de publication et mention de la délivrance du brevet: **17.11.2004**
(21) Numéro de dépôt: 02727680.7
(22) Date de dépôt: 19.04.2002
(51) Int. Cl.: B01J 8/02

(54) **DISPOSITIF POUR LA DISTRIBUTION HOMOGENE D'UN FLUIDE DANS UNE ENCEINTE ET SES UTILISATIONS**
VORRICHTUNG ZUR HOMOGENEN FLÜSSIGKEITSVERTEILUNG IN EINEM BEHÄLTER UND SEINE ANWENDUNG
DEVICE FOR HOMOGENEOUS DISTRIBUTION OF A FLUID IN A CHAMBER AND USES THEREOF

(30) Priorité: 04.05.2001 FR 0105981
(43) Date de publication de la demande: 28.01.2004
(73) Titulaire: TotalFinaElf France, 92800 Puteaux (FR)
(72) Inventeur: BARTHOD, Daniel, 77831 The Woodlands TEXAS (US); VEDRINE, Denis, F-76620 Le Havre (FR); NASCIMENTO, Pedro, F-76600 Le Havre (FR)
(74) Mandataire: Jolly, Jean-Pierre
(86) Numéro de dépôt international: PCT/FR2002/001348
(87) Numéro de publication internationale: WO 2002/089969

(56) Documents cités:
- FR-A- 2 280 436
- US-A- 3 547 354
- US-A- 4 471 821

## Description

La présente invention concerne un dispositif pour la distribution homogène d'un fluide dans une enceinte. Elle a plus particulièrement pour objet un dispositif apte à équiper un conduit d'alimentation en fluide, en vue de distribuer ce fluide à l'intérieur d'une enceinte de façon sensiblement homogène.

L'invention a également pour objet des utilisations de ce dispositif, en particulier pour l'alimentation d'un réacteur chimique en une charge fluide à traiter.

Il existe de très nombreux types d'enceintes alimentées en continu en un fluide, qui, suivant les applications, peut être un liquide, un gaz ou un gaz liquéfié, utilisé seul ou en mélange. US-A-3547354 décrit un distibuteur de l'état de la technique. Généralement, il est souhaitable de distribuer le fluide dans l'enceinte de façon homogène, c'est-à-dire de la même manière suivant toute la section transversale de l'enceinte.

Il peut s'agir, par exemple, d'un réacteur chimique, que l'on alimente en une charge à traiter, ou encore d'un échangeur thermique, alimenté en fluide primaire liquide ou gazeux, dans lequel baignent des tubes où circule un fluide secondaire.

Ces enceintes ont souvent une forme cylindrique et elles sont généralement alimentées à leur base ou à leur sommet par un conduit, qui présente fréquemment un coude, à proximité immédiate de son raccordement à l'enceinte. Or, il est connu que la présence d'un tel coude provoque des variations de vitesses de l'écoulement du fluide, perturbant ainsi, de façon sensible, la distribution de celui-ci dans l'enceinte. Si cette enceinte est, par exemple, un réacteur chimique comportant un lit fixe de catalyseur, ces perturbations peuvent provoquer des déformations physiques au sommet du lit catalytique au niveau de l'arrangement des billes de catalyseur, créer des vagues sur la surface du lit, ou encore favoriser des mouvements de fines de catalyseur, qui sont autant de handicaps pour un fonctionnement optimisé du réacteur.

Il est donc avantageux et même indispensable de distribuer le fluide de la façon la plus homogène possible en tête de l'enceinte, et notamment d'un réacteur, afin de minimiser les incidents de fonctionnement dus à des bouleversements de la surface du lit catalytique et, par conséquent, augmenter la durée du cycle de fonctionnement.

Pour répondre à ces exigences, on a déjà proposé divers type de systèmes d'homogénéisation et de distribution.

C'est ainsi que l'on a suggéré de disposer un pré-distributeur à l'intérieur du conduit d'alimentation, en aval du coude qu'il comporte éventuellement, et en amont de l'orifice par lequel il débouche dans l'enceinte à alimenter, et, de préférence, un second distributeur en aval de cet orifice.

On a ainsi proposé d'utiliser comme pré-distributeur, pour des écoulements monophasiques, une simple plaque disposée transversalement au conduit d'alimentation et percée de trous répartis de façon sensiblement régulière suivant toute sa surface.

Une telle plaque perforée améliore de façon appréciable l'homogénéité de la distribution d'un fluide, par exemple de la vapeur d'eau ayant une vitesse d'écoulement relativement élevée (supérieure à 5 m/s). En outre, elle permet d'atténuer sensiblement les effets dus à la présence d'un coude dans le conduit d'alimentation, en amont de la plaque. L'utilisation d'une telle plaque, dans le cas d'un écoulement monophasique, se révèle donc très avantageuse, mais ses utilisations sont limitées à ce type d'application.

On a aussi proposé, d'utiliser à la sortie de l'orifice d'alimentation de l'enceinte, un mélangeur statique. De tels mélangeurs sont préconisés essentiellement pour des écoulements laminaires, notamment des mélanges de fluides très visqueux, ou des mélanges ou des dispersions de liquides qui présentent des viscosités très différentes, afin d'obtenir une amélioration sensible de l'homogénéité des mélanges polyphasiques et de réduire, en particulier, les discontinuités gaz-liquides.

Ces mélangeurs statiques présentent toutefois l'inconvénient d'occuper une hauteur d'engagement importante dans l'enceinte, et souvent au détriment de la masse du catalyseur.

Parmi les systèmes de distribution fréquemment utilisés en aval des pré-distributeurs évoqués ci-dessus, on mentionnera les suivants, notamment pour la distribution de phases gazeuses :
- les distributeurs comprenant un élément en forme de calotte sphérique perforée, dont la concavité est tournée vers le pré-distributeur et dont la surface comporte des orifices de taille variable, répartis de façon sensiblement uniforme ;
- les distributeurs comportant un élément de forme générale tronconique, disposé en aval du pré-distributeur, avec son extrémité de plus petite section tournée vers celui-ci ;
- les diffuseurs comprenant au moins deux tubes coaxiaux engagés dans le conduit d'alimentation à partir de l'enceinte à alimenter, ces tubes étant raccordés à des parties évasées, par exemple tronconiques, à l'intérieur de cette enceinte.

Tous ces systèmes de distribution, ainsi que la plupart de ceux disponibles sur le marché, agissent sur le flux du fluide d'alimentation par déflexion de la direction de leur écoulement et ils sont d'une efficacité appréciable. Ils doivent toutefois être adaptés à chaque cas d'espèce et leur réalisation dépend, en particulier et de façon très sensible, du débit du fluide à distribuer, ce qui accroît notablement leur coût de fabrication.

De plus, tous ces ensembles constitués d'un pré-distributeur et d'un distributeur de fluides ne permettent pas d'obtenir à la fois :
- une vitesse minimale d'impact du fluide à la surface du lit catalytique, de l'ordre par exemple de 1m/s ou inférieure, et ceci quand le débit de la charge varie d'une centaine de tonnes par heure à plusieurs centaines de tonnes par heure. En effet, ces faibles vitesses permettent de minimiser les perturbations physiques de la surface du lit catalytique dues aux impacts plus ou moins forts du fluide sur celui-ci, ' et permettent aussi de réduire la création de fines de catalyseur provoquées par des phénomènes de re-circulation de la charge dans l'espace limité par la surface du lit catalytique et la paroi interne supérieure du réacteur ;
- une réduction significative du temps de séjour de la charge dans le réacteur permettant de minimiser la formation de gommes en tête du lit catalytique. En effet, il est connu que la présence de ces gommes favorise l'augmentation de la perte de charge du réacteur, provoquant ainsi une réduction du temps de cycle de l'unité ;
- une augmentation significative du débit de charge sans dégradation de la qualité de sa distribution dans le réacteur et notamment sur toute la surface transversale de celui-ci et, plus particulièrement, sur la surface du lit catalytique ; et enfin,
- une augmentation du volume du lit catalytique par diminution de l'encombrement de l'ensemble pré-distributeur et distributeur.

La présente invention vise à remédier à ces inconvénients en proposant un dispositif de distribution d'un fluide qui ne comporte pas deux éléments distincts séparés - pré-distributeur et distributeur -, mais qui est constitué d'un ensemble compact, monobloc et autonome, adaptable aux besoins d'un grand nombre de réacteurs.

L'invention vise également à proposer un dispositif de distribution de ce type qui puisse être utilisé sans modification pour des débits de fluide d'amplitudes très variables.

L'invention a aussi pour but de proposer un tel dispositif qui assure une distribution homogène du fluide sur toute la surface transversale de l'enceinte alimentée.

L'invention a enfin pour but de proposer un tel dispositif qui élimine ou réduit considérablement l'amplitude des phénomènes de re-circulation du fluide à l'intérieur de l'enceinte qu'il alimente, ainsi qu'une réduction significative du temps de séjour du fluide dans cette enceinte.

A cet effet, l'invention a pour objet un dispositif pour la distribution et la répartition homogène d'un fluide dans une enceinte, ce dispositif comportant essentiellement une chambre de diffusion destinée à être située au moins en partie à l'intérieur de l'enceinte, sensiblement suivant l'axe du conduit d'alimentation en fluide de cette enceinte, et à être engagée dans ce conduit, de préférence au niveau du raccordement du conduit et de l'enceinte, cette chambre de diffusion comportant sur l'ensemble de ses parois latérales des moyens d'évacuation du fluide vers la section de l'enceinte à remplir, ce dispositif étant caractérisé en ce que la chambre de diffusion est constituée d'un ensemble monobloc comprenant :
- une première plaque perforée destinée à être disposée en amont dans le sens d'écoulement du fluide et permettant l'alimentation en fluide de ladite chambre de diffusion,
- une deuxième plaque perforée disposée en aval et destinée à évacuer une partie du fluide à l'intérieur de l'enceinte, ces deux plaques ayant une forme et des dimensions sensiblement identiques à celles de la section transversale du conduit à équiper, et étant percées de trous répartis de façon sensiblement régulière à leur surface,
- des bandes latérales régulièrement espacées les unes des autres, disposées perpendiculairement aux deux plaques perforées et les réunissant à leur périphérie, soit directement, soit par l'intermédiaire d'une jupe,
- au moins un insert constitué par une couronne annulaire de diamètre externe identique au diamètre intérieur de la chambre, cette couronne annulaire étant disposée perpendiculairement à l'axe du conduit d'alimentation et faisant saillie vers l'intérieur de la chambre à partir de la ou des parois latérales de celle-ci, dont elle est rigidement solidaire, pour former un obstacle latéral à l'écoulement du fluide,
et en ce que la surface de l'insert est suffisante pour créer dans la partie amont de la chambre une pression supérieure à celle de la partie aval, en vue de renforcer l'alimentation en fluide de la partie la plus externe de la section transversale de l'enceinte.

Au sens de la présente invention, le terme "conduit d'alimentation" englobe aussi bien ce conduit proprement dit, que l'orifice tubulaire de l'enceinte auquel il est raccordé. Lorsque, dans la suite de la présente description et dans les revendications annexées, on parlera de conduit équipé ou à équiper du dispositif conforme à l'invention, ce terme de "conduit" pourra donc avoir l'une ou l'autre de ces significations.

Le dispositif conforme à l'invention comprend donc un ensemble monobloc formé de deux plaques perforées perpendiculaires à l'axe du conduit d'alimentation et de section sensiblement égale à la section interne transversale du conduit à équiper, ces deux plaques étant percées de trous répartis de façon sensiblement régulière à leur surface et étant réunies de façon solidaire à leur périphérie par des bandes latérales qui leur sont perpendiculaires, ces bandes étant régulièrement espacées les unes des autres. La plaque perforée située en amont fait office de pré-distributeur du fluide, tandis que l'autre plaque perforée, disposée en aval, constitue un moyen d'évacuation du fluide vers la section de l'enceinte à remplir.

Les deux plaques perforées ont, de préférence, un taux de perforation différent, la plaque destinée à être placée en amont dans le conduit à équiper ayant un plus grand nombre de perforations et une plus grande surface percée de trous que la plaque disposée en aval, qui fait office de distributeur proprement dit.

Les perforations de la plaque disposée en amont représentent entre 10 % et 50 % et avantageusement environ un tiers de la surface de cette plaque, tandis que celles de la plaque disposée en aval occupent entre 10 % et 50 % et, de préférence, entre 5 et 10 % de la surface de cette dernière.

La forme et les dimensions des perforations peuvent être les mêmes pour les deux plaques ou différentes, suivant l'effet recherché.

Ces perforations peuvent être, par exemple, circulaires et avoir un diamètre compris entre 1,25 cm et 5 cm.

L'insert annulaire fait saillie à partir des bandes latérales dont il est solidaire. Il a la forme d'une couronne, mais ce terme ne doit pas être limité à son sens géométrique usuel, car l'orifice central de cette couronne peut être excentré par rapport à l'axe de la chambre de diffusion et il peut avoir une forme qui n'est pas nécessairement circulaire. Cette couronne fait saillie à l'intérieur de la chambre de diffusion, perpendiculairement à l'axe du conduit d'alimentation en fluide, et forme ainsi un obstacle latéral à l'écoulement du fluide. La surface de la couronne doit être suffisante pour créer, dans la partie amont du dispositif, une pression supérieure à celle de la partie aval, en vue de renforcer ainsi l'alimentation en fluide de la partie la plus externe de la section transversale de l'enceinte, qui est généralement de forme cylindrique.

Cet insert annulaire peut être disposé à divers niveaux de la chambre pour tenir compte de la configuration géométrique de l'enceinte, en particulier à entre 25 % et 75 % de la distance séparant la première plaque de la chambre de diffusion de la seconde plaque et, de préférence, entre 50 % et 60 % de cette distance. La surface de l'insert représente entre 20 % et 80 % et, de préférence, entre 40 % et 60 % de la section transversale de la chambre de diffusion.

La fraction du fluide qui rencontre l'insert annulaire est déviée par celui-ci, une partie étant éjectée vers l'extérieur, par les espaces séparant les bandes latérales de la chambre de diffusion, tandis qu'une autre partie est renvoyée vers l'intérieur du dispositif. La présence de cet insert accroit ainsi considérablement l'efficacité du dispositif, en ce qui concerne l'homogénéisation du flux de fluide distribué dans l'enceinte. Il présente en outre l'avantage d'être très peu sensible aux variations de débit.

La surface pleine de l'insert représente entre 20 % et 80 % de la section transversale de la chambre de diffusion et, de préférence, entre 40 et 60 % de cette section.

Les intervalles séparant les bandes latérales du dispositif représentent entre 30 % et 70 % et, avantageusement, entre 40 % et 60 % de la surface latérale externe du dispositif.

De préférence, les bandes sont reliées entre elles par une jupe, elle-même solidaire de la plaque perforée destinée à être placée en amont dans le conduit à équiper, en vue de permettre l'homogénéisation de l'écoulement en aval du pré-distributeur. Cette jupe s'étend, de préférence, sur une longueur représentant entre 10 % et 30 % de la hauteur de la chambre de diffusion.

Le distributeur conforme à l'invention peut avoir une section transversale de forme quelconque, notamment circulaire ou carrée, adaptée à la section interne du tube qu'il est destiné à équiper.

Dans une forme préférée de mise en oeuvre de l'invention, le dispositif est logé au moins partiellement dans le conduit d'alimentation de l'enceinte, au niveau du raccordement dudit conduit et de l'enceinte.

Le dispositif est destiné à être engagé dans le tube à équiper de façon à faire saillie à l'extérieur de celui-ci à l'intérieur de l'enceinte, sur une distance représentant entre 60 % et 80 % de sa longueur.

Ce dispositif est susceptible de multiples utilisations, pour l'alimentation d'enceintes diverses en fluides monophasiques ou polyphasiques, dont les valeurs de débit peuvent s'étendre sur un très large domaine. Des moyens de calcul connus dans la technique permettent de dimensionner le dispositif et notamment l'insert pour une adaptation au réacteur à équiper.

En outre, la forme de l'insert, ses dimensions et son emplacement dans la chambre de diffusion peuvent être parfaitement modélisés, puis calculés par des moyens de calcul connus dans la technique.

Ce dispositif s'est révélé particulièrement avantageux dans l'alimentation en une charge à traiter, notamment une charge d'hydrocarbures, d'un réacteur comportant un lit fixe de catalyseur.

Cette utilisation du dispositif, qui sera décrite ci-après plus en détail, constitue un autre objet de la présente invention.

L'invention va être décrite ci-après plus en détail dans cette application, en référence aux dessins schématiques annexés. Sur ces dessins :
- la figure 1 est une vue en élévation, avec un arraché partiel, d'un réacteur d'hydrotraitement d'hydrocarbures, à lit catalytique fixe ;
- la figure 2 est une vue de détail à plus grande échelle illustrant le raccordement du conduit d'alimentation à ce réacteur ;
- la figure 3 est une vue en perspective du dispositif de distribution de la charge utilisée dans ce réacteur ;
- la figure 4 est une autre vue en perspective partielle du dispositif de la figure 3, illustrant l'intérieur de ce dispositif.

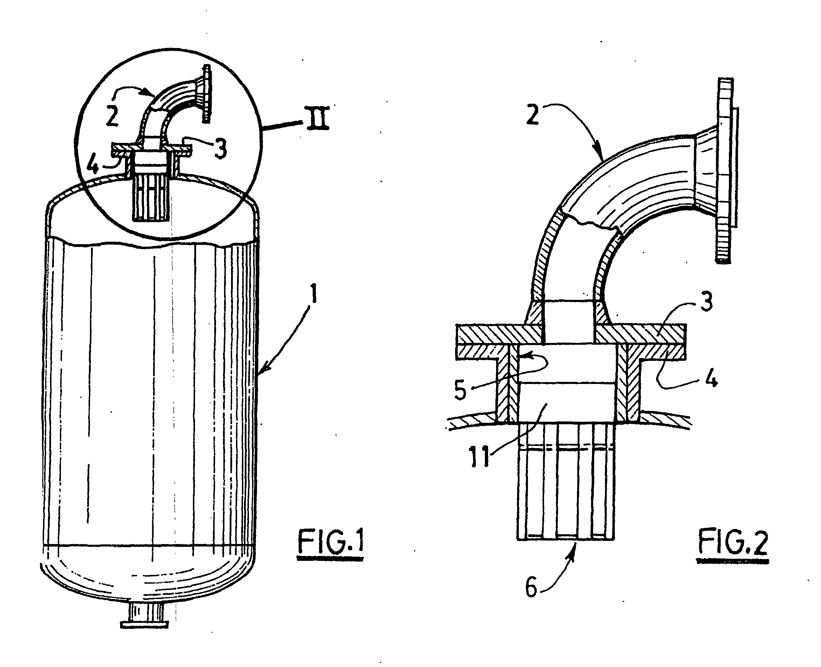

Le réacteur 1 représenté sur la figure 1 est un réacteur d'hydrotraitement des essences, dans lequel est logé un lit fixe de catalyseur. Les réacteurs de ce type sont bien connus dans la technique et le réacteur 1 ne sera donc pas décrit plus en détail.

L'alimentation du réacteur 1 en essences en phase gazeuse s'effectue à sa partie supérieure par un conduit, non représenté, raccordé au réacteur 1 par un coude 2.

On voit sur la figure 2 que le coude 2 comporte une bride 3, fixée sur une bride 4 disposée à l'entrée d'un orifice tubulaire 5 du réacteur.

C'est cet orifice tubulaire qui est destiné à recevoir le dispositif de distribution 6 conforme à l'invention, lui-même rendu solidaire de l'orifice tubulaire par tout moyen connu dans la technique.

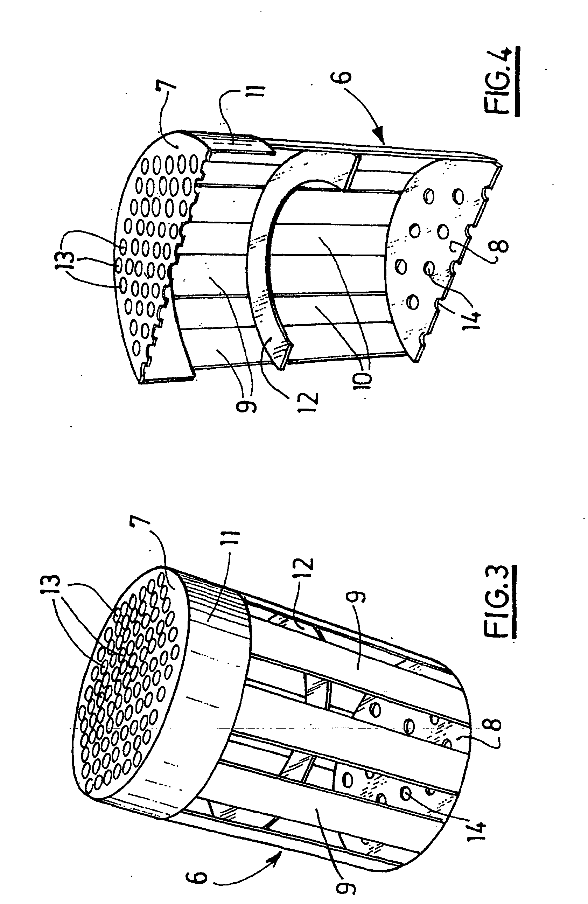

Comme représenté sur les figures 3 et 4, ce dispositif 6 est constitué par :
- une première plaque métallique perforée 7, disposée à l'extrémité amont du dispositif dans le sens d'écoulement des vapeurs d'essences et qui fait office de pré-distributeur ;
- une seconde plaque métallique perforée 8, parallèle à la précédente et disposée à l'extrémité aval du dispositif, qui fait office de distributeur proprement dit ;
- des bandes métalliques 9, ici au nombre de dix et ayant une longueur de 45 cm et une largeur de 8,08 cm, qui réunissent le bord des plaques 7 et 8, auxquelles elles sont perpendiculaires, ces bandes 9 étant régulièrement espacées les unes des autres et séparées par des intervalles 10, d'une largeur de 5,38 cm ;
- une jupe métallique 11 attenante à la périphérie de la plaque 7 et reliant les bandes 9 entre elles ;
- un insert annulaire métallique 12 en forme de couronne plane, solidaire des bandes 9 et faisant saillie à partir de la face interne de ces bandes vers l'intérieur du dispositif, parallèlement aux plaques 7 et 8.

Comme indiqué ci-dessus, les perforations 13 de la plaque amont 7 sont en plus grand nombre que les perforations 14 de la plaque 8 et occupent une fraction plus importante (ici égale à environ 32 % de cette plaque 7) que la portion de la plaque 8 occupée par les perforations 14 de celle-ci (ici, environ 7 %).

Les formes et les dimensions des perforations 13 et 14, ainsi que leur mode de répartition à la surface des plaques 7 et 8 peuvent être absolument quelconques et sont choisis en fonction de l'effet recherché, mais il est préférable que les perforations d'une même plaque soient disposées suivant des droites parallèles entrecroisées, plutôt que suivant des cercles concentriques.

Le dispositif 6 vient se loger dans l'orifice tubulaire 5 du réacteur 1 et il a donc une section transversale externe de même forme (ici circulaire) et de mêmes dimensions (ici un diamètre de 42,86 cm) que la section transversale interne de l'orifice 5. La jupe 11 vient s'appliquer contre la surface interne de cet orifice, qui a pour but de permettre l'homogénéisation de l'écoulement.

Les intervalles 10 séparant les bandes 9 (ici au nombre de dix) occupent environ 40 % de la surface comprise entre le bas de la jupe 11 et la plaque 8.

Les bandes 9 peuvent éventuellement être remplacées par de simples barreaux, pourvu que le type général du dispositif, en forme de "cage d'oiseaux", soit conservé.

Comme exposé ci-dessus, l'insert 12 en forme de couronne joue un rôle essentiel dans le dispositif, puisqu'il constitue un obstacle au libre passage du flux, déjà pré-homogénéisé par passage à travers les perforations 13 de la plaque 7, avec pour effet une projection de la fraction de ce flux qui rencontre l'insert, soit vers l'extérieur du dispositif, à travers les intervalles 10 séparant les bandes 9, soit vers l'intérieur du dispositif.

Dans la forme de réalisation illustrée par les dessins, la surface de l'insert représente environ 50 % de la section transversale du dispositif et il est situé à une distance de la plaque 8 représentant 60 % de la longueur des bandes 9.

Dans cette application, le fluide est constitué de vapeurs d'essence, mais le dispositif conforme à l'invention s'applique aussi bien à une distribution sensiblement homogène de liquides ou de gaz liquéfiés, et ceci d'autant plus que, dans la présente utilisation, les vapeurs d'essence sont considérées comme constituant un gaz incompressible.

L'Exemple suivant illustre les avantages d'un dispositif conforme à l'invention dans cette utilisation.

### EXEMPLE

Dans cet exemple, le réacteur d'hydrotraitement des essences est un réacteur cylindrique, ayant les dimensions suivantes :
- diamètre intérieur = 3 rn,
- hauteur du réacteur = 11 m.

Il contient un lit catalytique fixe dont les principales caractéristiques géométriques sont les suivantes :
- hauteur = 3,75 m
- distance de la surface du lit catalytique au dispositif de distribution = 0,6 m.

L'hydrogène utilisé pour l'hydrotraitement est introduit en aval du réacteur.

L'alimentation du réacteur en vapeurs d'essence s'effectue dans les conditions suivantes
- débit (t/h) : * standard : 131,4,
   * maximum : 178,0,
   * dégoullotage : 200,0,
- pression opératoire (10⁵ Pa) : 29,8,
- densité des vapeurs (kg/m³) : 43,93,
- viscosité de la vapeur (mm²/s) : 0,01641.

Dans les essais effectués à chacun des débits indiqués, on a utilisé comme moyen de distribution :
- une simple plaque perforée identique à la plaque 7 du dispositif décrit ci-dessus, disposée à la sortie de l'orifice tubulaire 5 ;
- la forme de réalisation décrite ci-dessus du dispositif objet de la présente invention, mais sans l'insert 12 en forme de couronne ;
- ce même dispositif, avec l'insert 12.

Dans le cas du dispositif conforme à l'invention, avec ou sans insert, celui-ci est engagé dans l'orifice tubulaire 5 suivant une longueur représentant 40 % de la hauteur du dispositif et il fait donc saillie à l'extérieur de cet orifice à l'intérieur du réacteur.

La vitesse maximum du flux de vapeurs à la surface du lit a été mesurée pour chacun des dispositifs et les résultats obtenus sont rassemblés dans le Tableau 1 ci-après.

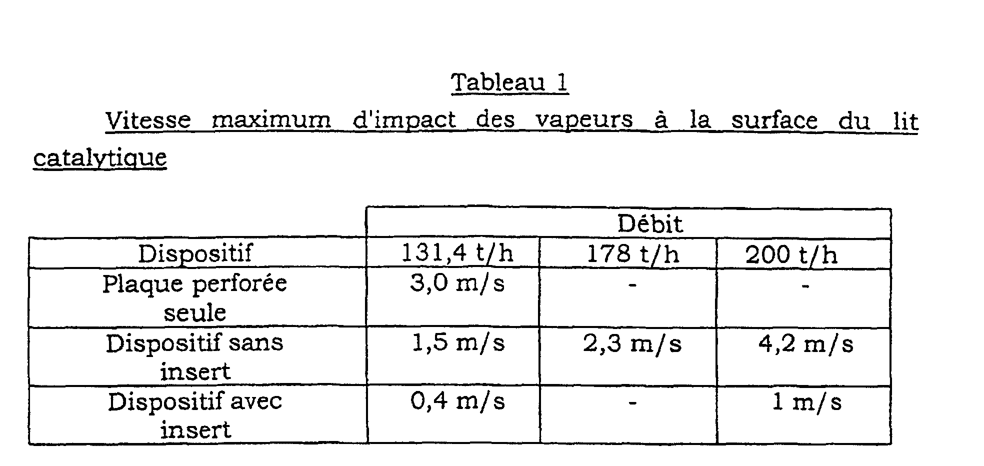

Ce Tableau montre que le dispositif conforme à l'invention permet de limiter considérablement les perturbations dues à l'impact des vapeurs d'essence à la surface du lit catalytique, puisque les vitesses d'impact sont limitées de façon très significative, en particulier lorsque le dispositif comporte un insert, et ceci non seulement pour un débit d'alimentation standard, mais aussi avec des débits notablement plus élevés.

Cela permet en outre de réduire de façon appréciable l'ampleur des recirculations en tête de réacteur. Ceci s'explique par le fait que l'écoulement du fluide est étagé, le flux étant "cassé" en divers emplacements :
- par la plaque amont 7, faisant office de pré-distributeur ;
- au niveau de l'insert annulaire 12, où le flux est séparé en deux ;
- par la plaque aval 8, où le flux est à nouveau homogénéisé.

Il en résulte les avantages suivants, très appréciables pour la présente utilisation :
- un plus faible entraînement de fines de catalyseur, avec une diminution concomitante de la formation de gommes ;
- la possibilité d'accroître la hauteur du lit catalytique, cette augmentation pouvant atteindre jusqu'à 10 % du volume du catalyseur, avec pour conséquence une durée de cycle plus favorable, due notamment, à l'augmentation de la masse catalytique ;
- la possibilité d'accroître le débit de la charge traitée sans dégrader la qualité de la distribution de cette charge ;
- une diminution du temps de séjour de la charge dans le réacteur. Les avantages du dispositif de distribution conforme à l'invention sont donc clairement mis en évidence par ces essais.

En plus d'une utilisation dans les réacteurs d'hydrotraitement de l'industrie pétrolière, le dispositif conforme à l'invention peut être mis en oeuvre dans d'autres types variés d'enceintes et, en particulier, la calandre d'un échangeur thermique.

## Revendications

1. Dispositif pour la distribution et la répartition homogène d'un fluide dans une enceinte (1), ce dispositif comportant essentiellement une chambre de diffusion (6) destinée à être située au moins en partie à l'intérieur de l'enceinte, sensiblement suivant l'axe du conduit (5) d'alimentation en fluide de cette enceinte, et à être engagée dans ce conduit, de préférence au niveau du raccordement du conduit et de l'enceinte, cette chambre de diffusion comportant sur l'ensemble de ses parois latérales des moyens d'évacuation (10) du fluide vers la section de l'enceinte à remplir, ce dispositif étant **caractérise en ce que** la chambre de diffusion (6) est constituée d'un ensemble monobloc comprenant :
- une première plaque perforée (7) destinée à être disposée en amont dans le sens d'écoulement du fluide et permettant l'alimentation en fluide de ladite chambre de diffusion,
- une deuxième plaque perforée (8) disposée en aval et destinée à évacuer une partie du fluide à l'intérieur de l'enceinte, ces deux plaques ayant une forme et des dimensions sensiblement identiques à celles de la section transversale du conduit (5) à équiper, et étant percées de trous (13, 14) répartis de façon sensiblement régulière à leur surface,
- des bandes latérales (9) régulièrement espacées les unes des autres, disposées perpendiculairement aux deux plaques perforées (7, 8) et les réunissant à leur périphérie, soit directement, soit par l'intermédiaire d'une jupe (11),
- au moins un insert (12) constitué par une couronne annulaire de diamètre externe identique au diamètre intérieur de la chambre, cette couronne annulaire étant disposée perpendiculairement à l'axe du conduit d'alimentation et faisant saillie vers l'intérieur de la chambre à partir de la ou des parois latérales de celle-ci, dont elle est rigidement solidaire, pour former un obstacle latéral à l'écoulement du fluide,
et **en ce que** la surface de l'insert (12) est suffisante pour créer dans la partie amont de la chambre une pression supérieure à celle de la partie aval, en vue de renforcer l'alimentation en fluide de la partie la plus externe de la section transversale de l'enceinte.

2. Dispositif selon la revendication 1, **caractérisé en ce que** l'insert (12) est disposé dans la chambre de diffusion à une distance de la première plaque perforée (7) comprise entre 25 % et 75 % et, de préférence, entre 50 % et 60 % de la distance séparant cette première plaque (7) de la seconde plaque perforée (8).

3. Dispositif selon l'une des revendications 1 et 2, **caractérisé en ce que** la surface pleine de l'insert représente entre 20 % et 80 % et, de préférence, entre 40 % et 60 % de la section transversale de la chambre de diffusion (6).

4. Dispositif selon l'une des revendications 1 à 3, **caractérisé en ce que** la fraction de la surface occupée par les perforations (13) de la première plaque (7) est supérieure à la fraction de la surface occupée par les perforations (14) de la seconde plaque (8).

5. Dispositif selon l'une des revendications 1 à 4, **caractérisé en ce que** les perforations (13) de la première plaque (7) occupent entre 10% et 50% et, de préférence, un tiers de la surface de cette plaque.

6. Dispositif selon l'une des revendications 1 à 5, **caractérisé en ce que** les perforations (14) de la seconde plaque (8) occupent entre 5 et 25 % et, de préférence, entre 5 et 10% de la surface de cette plaque.

7. Dispositif selon l'une des revendications 1 à 6, **caractérisé en ce que** les intervalles (10) entre les bandes (9) représentent entre 30 % et 70 % et, de préférence, entre 40 % et 60 % de la surface latérale externe de la chambre de diffusion (6).

8. Dispositif selon l'une des revendications 1 à 7, **caractérisé en ce que** la jupe (11) s'étend à partir de la première plaque perforée (7), sur une longueur représentant entre 10 % et 30 % de la distance séparant cette première plaque (7) de la seconde plaque (8).

9. Utilisation d'un dispositif selon l'une des revendications 1 à 8 pour la distribution homogène d'un fluide dans une enceinte (1), **caractérisée en ce que** la chambre de diffusion (6) du dispositif a une section transversale externe sensiblement égale à la section transversale interne du tube d'alimentation (2) de cette enceinte (1) ou de l'orifice annulaire de cette enceinte auquel est raccordé le tube d'alimentation (2), et **en ce que** le dispositif est engagé dans ce tube ou dans cet orifice sur une distance représentant entre 5 % et 50 % et, de préférence, entre 20 % et 40 % de sa longueur.

10. Utilisation selon la revendication 9, **caractérisée en ce que** l'enceinte (1) est un réacteur chimique destiné au traitement d'une charge, notamment d'hydrocarbures, qui constitue le fluide à distribuer dans l'enceinte.

11. Utilisation selon la revendication 10, **caractérisée en ce que** le réacteur est un réacteur comportant un lit fixe de catalyseur.

## Patentansprüche

1. Vorrichtung zur homogenen ver- und Aufteilung eines Strömungsmittels in einem geschlossenen Behälter (1), wobei diese Vorrichtung im Wesentlichen eine Diffusionskammer (6) umfasst, die bestimmungsgemäß wenigstens teilweise im Inneren des Behälters im wesentlichen längs der Strömungsmittel-Zufuhrleitung (5) in diesen Behälter angeordnet und in dieser Zufuhrleitung gehaltert ist, vorzugsweise auf der Höhe der Anschlussverbindung der Leitung mit dem Behälter, wobei die Diffusionskammer auf der Gesamtheit ihrer Seitenwandungen Mittel (10) zum Austritt des Strömungsmittels in Richtung des Querschnitts des zu füllenden Behälters aufweist, und wobei diese Vorrichtung **dadurch gekennzeichnet ist, dass** die Diffusionskammer (6) von einem Monoblockaggregat gebildet ist, das Folgendes umfasst:
- eine erste Lochplatte (7), die bestimmungsgemäß in Strömungsrichtung des Strömungsmittels stromaufwärts angeordnet ist und die Zufuhr des Strömungsmittels in die Diffusionskammer gestattet,
- eine zweite, stromabwärts angeordnete Lochplatte (8), die bestimmungsgemäß einen Teil des Strömungsmittels in das Behälterinnnere austreten lässt, wobei diese beiden Platten eine Form und Abmessungen besitzen, die im Wesentlichen mit denen des Querschnitts der sie aufnehmenden Leitung(5) übereinstimmen, und mit Löchern (13,14) versehen sind, die in im Wesentlichen regelmäßiger Weise über ihre Oberfläche verteilt sind,
- regelmäßig voneinander beabstandete seitliche Bänder (9), die rechtwinklig zu den beiden Lochplatten (7,8) angeordnet sind und diese an ihrem Umfang direkt oder mittels eines Mantels (11) miteinander verbinden,
- wenigstens einen von einem Kronenring gebildeten Einsatz (12), dessen Außendurchmesser gleich dem Innendurchmesser der Kammer ist, wobei der Kronenring rechtwinklig zur Achse der Speise- bzw. Zufuhrleitung angeordnet ist und von der bzw. den Seitenwandung(en) der Kammer, mit der bzw. denen er fest verbunden ist, in das Innere der Kammer vorspringt, zur Bildung eines lateralen Hindernisses für den Strömunsmittel-Fluss, und die Oberfläche des Einsatzes (12) ausreichend ist, um in dem stromaufwärtigen Teil der Kammer einen Druck zu erzeugen, der größer als der Druck im stromabwärtigen Teil ist, um die Speisung des weiter außen gelegenen Teils des Behälterquerschnitts mit dem Strömungsmittel zu erhöhen.

2. Vorrichtung nach Anspruch 1, **dadurch gekennzeichnet, dass** der Einsatz (12) in der Diffusionskammer in einem Abstand von der ersten Lochplatte (7) im Bereich zwischen 25 % und 75 %, und vorzugsweise zwischen 50 % und 60 %, des die erste Lochplatte (7) von der zweiten Lochplatte (8) trennenden Abstands angeordnet ist.

3. Vorrichtung nach einem der Ansprüche 1 und 2, **dadurch gekennzeichnet, dass** die volle Oberfläche des Einsatzes zwischen 20 % und 80 %, und vorzugsweise zwischen 40 % und 60 %, des Querschnitts der Diffusionskammer (6) ausmacht.

4. Vorrichtung nach einem der Ansprüche 1 bis 3, **dadurch gekennzeichnet, dass** der von den Löchern (13) der ersten Platte (7) eingenommene Oberflächenanteil größer als der von den Löchern (14) der zweiten Platte (8) eingenommene Oberflächenanteil ist.

5. Vorrichtung nach einem der Ansprüche 1 bis 4, **dadurch gekennzeichnet, dass** die Löcher (13) der ersten Platte (7) zwischen 10 % und 50 %, und vorzugsweise ein Drittel, der Oberfläche dieser Platte einnehmen.

6. Vorrichtung nach einem der Ansprüche 1 bis 5, **dadurch gekennzeichnet, dass** die Löcher (14) der zweiten Platte (8) zwischen 5 % und 25 %, und vorzugsweise zwischen 5 % und 10 %, der Oberfläche dieser Platte einnehmen.

7. Vorrichtung nach einem der Ansprüche 1 bis 6, **dadurch gekennzeichnet, dass** die Abstände (10) zwischen den Bändern (9) zwischen 30 % und 70 %, und vorzugsweise zwischen 40 % und 60 %, der Außenseitenfläche der Diffusionskammer (6) darstellen.

8. Vorrichtung nach einem der Ansprüche 1 bis 7, **dadurch gekennzeichnet, dass** der Mantel (11) sich ausgehend von der ersten Lochplatte (7) über eine zwischen 10 % und 30 % des die erste Platte (7) von der zweiten Platte (8) trennenden Abstands darstellende Länge erstreckt.

9. Anwendung einer Vorrichtung nach einem der Ansprüche 1 bis 8 zur homogenen Verteilung eines Strömungsmittels in einem geschlossenen Behälter (1), **dadurch gekennzeichnet, dass** die Diffusionskammmer (6) der Vorrichtung einen Außenquerschnitt im Wesentlichen gleich dem Innenquerschnitt der Zufuhr- bzw. Speiseleitung (2) dieses Behälters (1) oder der ringförmigen Mündungaoffnung dieses Behälters, mit welcher die Zufuhr- bzw. Speiseleitung (2) verbunden ist, besitzt, und dass die Vorrichtung in dieser Leitung oder in dieser Mündungsöffnung über eine Strecke gehaltert ist, welche zwischen 5 % und 50 %, und vorzugsweise zwischen 20 % und 40 %, ihrer Länge darstellt.

10. Anwendung nach Anspruch 9, **dadurch gekennzeichnet, dass** der Behälter (1) ein chemischer Reaktionsbehälter zur Bearbeitung einer Charge, insbesondere von Kohlenwasserstoffen, ist, welche das in dem Behälter zu verteilende Strömungsmittel bildet.

11. Anwendung nach Anspruch 10, **dadurch gekennzeichnet, dass** der Reaktionsbehälter ein ein festes Katalysatorbett enthaltender Reaktionsbehälter ist.

## Claims

1. A device for the homogeneous distribution of a fluid into an enclosure (1), said device essentially comprising a diffusion chamber (6) intended to be disposed at least partly inside the enclosure, substantially along the axis of the fluid-feed duct (5) of said enclosure, and to be engaged in this duct, preferably at level of the joint between the duct and the enclosure, said diffusion chamber comprising on the assembly of its side walls means (10) for discharging the fluid towards the section of the enclosure to be filled, said device being **characterised in that** the diffusion chamber (6) is formed by a one-piece assembly comprising:
- a first perforated plate (7) intended to be disposed upstream in the flow direction of the fluid and enabling said diffusion chamber to be supplied with fluid,
- a second perforated plate (8) disposed downstream and intended to discharge a portion of the fluid inside the enclosure, said two plates being of a shape and dimensions substantially identical to those of the cross-section of the duct (5) to be provided therewith, and being perforated with holes (13,14) distributed substantially regularly on their surface,
- lateral strips (9) which are regularly spaced apart, which are disposed perpendicularly to the perforated plates (7,8) and joining them together on their periphery, either directly or by means of a skirt (11),
- at least one insert (12) formed by an annular collar whose outer diameter is identical to the inner diameter of the chamber, said annular collar being disposed perpendicularly to the axis of the feed duct and projecting towards the interior of the chamber from the side wall or walls thereof, to which it is rigidly attached so as to form a lateral obstacle to the flow of the fluid,
and **in that** the surface of the insert (12) is sufficient to create in the upstream part of the chamber a pressure which is higher than that of the downstream part so as to increase the supply of fluid in the outermost part of the cross-section of the enclosure.

2. A device according to claim 1, **characterised in that** the insert (12) is disposed in the diffusion chamber at a distance from the first perforated plate (7) of between 25 % and 75 % and, preferably, between 50 % and 60 % of the distance separating this first plate (7) from the second perforated plate (8).

3. A device according to either one of claims 1 and 2, **characterised in that** the solid surface of the insert represents between 20 % and 80 % and, preferably, between 40 % and 60 % of the cross-section of the diffusion chamber.

4. A device according to any one of claims 1 to 3, **characterised in that** the fraction of the surface occupied by the perforations (13) of the first plate (7) is greater than the fraction of the surface occupied by the perforations (14) of the second plate (8).

5. A device according to any one of claims 1 to 4, **characterised in that** the perforations (13) of the first plate (7) occupy between 10 % and 50 % and, preferably, one third of the surface of this plate.

6. A device according to any one of claims 1 to 5, **characterised in that** the perforations (14) of the second plate (8) occupy between 5 % and 25 % and, preferably, between 5 and 10 % of the surface of this plate.

7. A device according to any one of claims 1 to 6, **characterised in that** the gaps (10) between the strips (9) represent between 30 % and 70 % and, preferably, between 40 % and 60 % of the outer lateral surface of the diffusion chamber (6).

8. A device according to any one of claims 1 to 7, **characterised in that** the skirt (11) extends from the first perforated plate (7) over a length representing between 10 % and 30 % of the distance separating said first plate (7) from the second plate (8).

9. Use of a device according to any one of claims 1 to 8 for the homogeneous distribution of a fluid in an enclosure (1), **characterised in that** the diffusion chamber (6) of the device has an outer cross-section substantially equal to the inner cross-section of the feed tube (2) for said enclosure (1) of the annular orifice of said enclosure to which the feed tube (2) is connected, and **in that** the device is fitted into said tube or into said orifice over a distance representing between 5 % and 50 % and, preferably, between 20 % and 40 % of its length.

10. Use according to claim 9, **characterised in that** the enclosure (1) is a chemical reactor intended for the treatment of a charge, in particular of hydrocarbons, which constitutes the fluid to be distributed in the enclosure.

11. Use according to claim 10, **characterised in that** the reactor is a reactor comprising a fixed catalyst bed.
